# FASCICULE DE BREVET EUROPEEN

(11) **EP 2 334 851 B1**
(45) Date de publication et mention de la délivrance du brevet: **03.07.2013**
(21) Numéro de dépôt: 09737038.1
(22) Date de dépôt: 28.08.2009
(51) Int. Cl.: D01D 5/098, D04H 3/16

(54) **INSTALLATION DE PRODUCTION D'UN VOILE DE NON TISSE AVEC DEPOUSSIERAGE**
VORRICHTUNG ZUR HERSTELLUNG EINES VLIESSTOFFS UNTER ENTSTAUBUNG
APPARATUS FOR PRODUCING A NON-WOVEN WEB WITH DUST REMOVAL

(30) Priorité: 16.09.2008 FR 0805058
(43) Date de publication de la demande: 22.06.2011
(73) Titulaire: ANDRITZ Perfojet SAS, 38330 Montbonnot (FR)
(72) Inventeur: DUBUS, Jean-Michel, F-38350 Nantes en Rattier (FR)
(74) Mandataire: Eidelsberg, Victor Albert
(86) Numéro de dépôt international: PCT/FR2009/001041
(87) Numéro de publication internationale: WO 2010/031912

(56) Documents cités:
- WO-A-03/106749
- JP-A- 10 331 062
- JP-A- 2003 089 921
- JP-A- 2005 344 217
- JP-A- 2008 159 374
- US-A- 4 578 134

## Description

La présente invention se rapporte aux installations de production de voiles de nontissé. Elle s'applique plus particulièrement aux installations de production de nontissés spunbond à dispositif d'étirage continu à fente, mais aussi à des systèmes fermés, à des systèmes à dispositifs d'étirage cylindriques et d'une manière générale à tout dispositif de production d'un voile utilisant l'application de forces électrostatiques à un paquet de filaments entraîné par un courant d'air avant de déposer ce paquet en un voile sur un convoyeur.

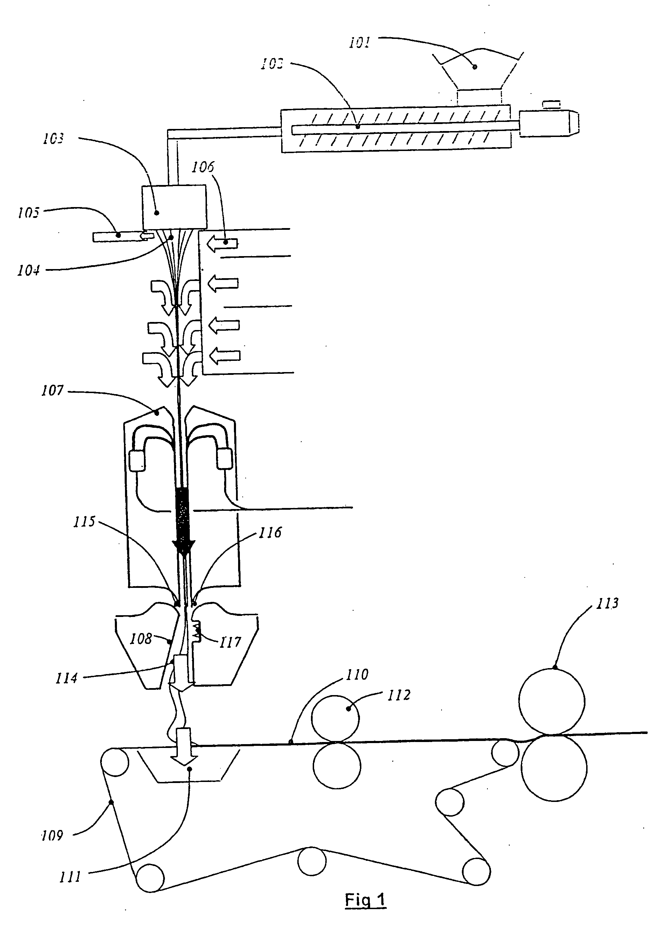

Dans le procédé de fabrication de voiles de nontissé par technologie spunbond, tel que représenté succinctement en figure 1, le polymère sous forme de granulés (101) est fondu dans une extrudeuse (102), puis filé à travers une filière (103) sous forme de filaments chauds continus (104). Les fumées émises lors de la filature sont collectées par un dispositif de captation (105). Les filaments sont ensuite refroidis dans un dispositif (106) par un courant d'air à température et vitesse contrôlées, puis introduits dans un dispositif d'étirage (107). Ce dispositif permet d'appliquer un effort de tension sur les filaments qui permet l'orientation des chaînes moléculaires et l'obtention du diamètre désiré.
En sortie du dispositif d'étirage, un dispositif supplémentaire, appelé dispositif de formation (108), est généralement disposé afin de permettre la dépose des filaments sur un tapis de convoyage (109) pour former la nappe non tissée (110). La fonction principale de ce dispositif de formation est de réduire la vitesse des filaments, de disperser les paquets de filaments de façon la plus uniforme possible sur la largeur de la machine et de permettre une dépose aléatoire et homogène sur le convoyeur. Le dispositif (106), le dispositif (107) et le dispositif (108) forment un dispositif d'entraînement des filaments vers le bas par un courant d'air.
Un dispositif d'aspiration (111) situé sous la toile du convoyeur permet de plaquer et de maintenir la nappe sur le convoyeur. La nappe non tissée passe ensuite à travers un dispositif de compactage (112) et de consolidation (113). Ce dernier peut être un système de calandrage ou tout autre dispositif de consolidation (aiguilletage mécanique, liage chimique, liage par jet de fluide). La nappe est alors acheminée vers la suite du processus. (traitement, bobinage)

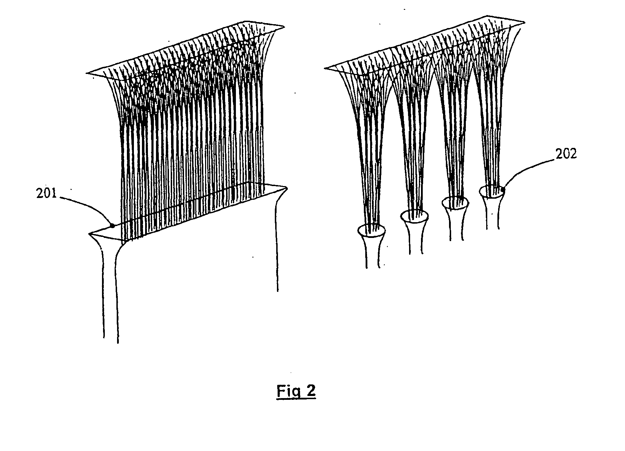

Le dispositif d'étirage, installé verticalement, peut être constitué (Fig 2) soit d'une fente continue (fig 2-201) dans laquelle est introduit le rideau de filaments soit d'une juxtaposition d'orifices cylindriques (fig 2-202) qui reçoivent chacun un groupe de filaments.

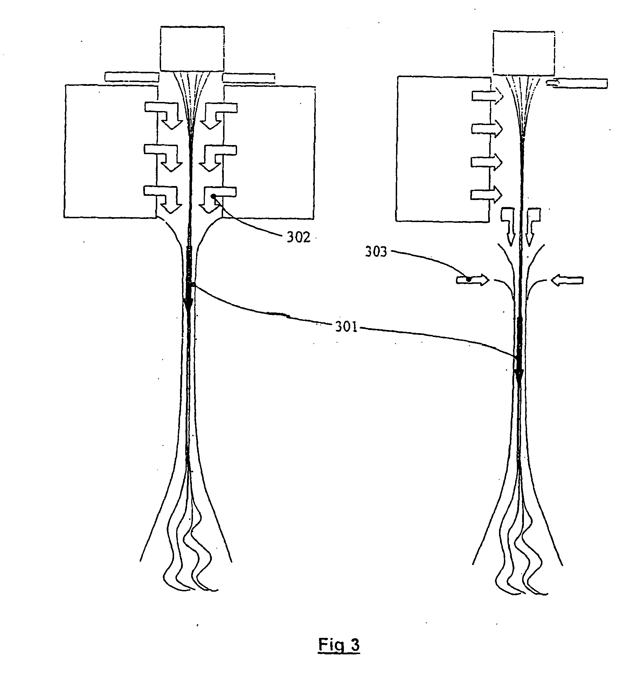

L'effet d'étirage est généralement obtenue (Fig 3) par un courant d'air (fig 3-301) circulant de haut en bas qui entraîne les filaments par friction de l'air. Le courant d'air peut être soit généré par le flux d'air (fig 3-302) introduit pour le refroidissement des filaments (système fermé), soit par injection d'air supplémentaire (fig 3-303) dans le dispositif d'étirage qui provoque un écoulement d'ensemble par effet venturi (système ouvert).

En sortie du dispositif d'étirage, le système de formation comprend généralement un système aéraulique (par exemple un diffuseur, fig 1-114) qui modifie le profil de l'écoulement d'air à la sortie du dispositif d'étirage. Il est notamment intéressant de disposer de façon judicieuse des fentes supplémentaires d'injection d'air (fig 1-115 et fig 1-116) qui permettent de contrôler les écoulements et d'éviter l'apparition ou le développement inopportun de turbulences.

Un dispositif de type électrostatique (fig 1-117) peut venir judicieusement compléter l'efficacité du diffuseur sur le dégroupement des paquets de filament.

Le dispositif électrostatique fonctionne sur le principe de l'effet Corona qui entraîne une ionisation de l'air à proximité d'une pointe soumise à un potentiel électrique.

L'effet Corona requiert :
- Une électrode de petite taille qui peut être soit une pointe (ou un réseau de pointe), soit un fil,
- Un champ électrique, créé par la différence de potentiel établie entre l'électrode et une électrode opposée constituée généralement d'une plaque plane conductrice située en face de l'électrode principale
La petite taille de l'électrode provoque une concentration des lignes de champ qui peut alors dépasser le seuil d'ionisation et provoquer une ionisation de l'air.

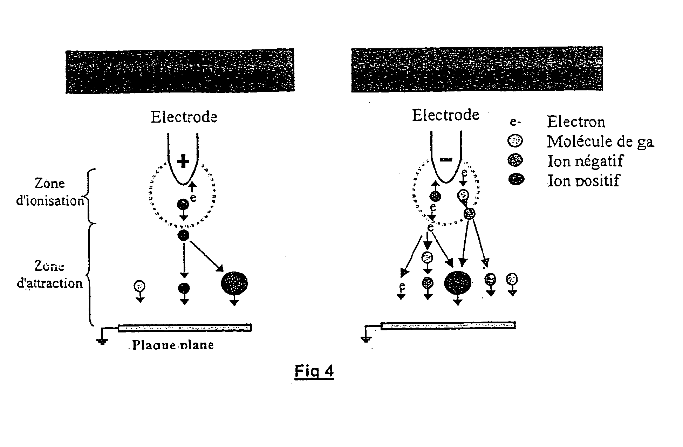

Suivant la polarité appliquée, l'effet Corona est dit positif ou négatif et entraîne une ionisation différente de l'air. (Fig 4)

Dans les deux cas, des particules de polarité positive et négative sont créées, puis sont entraînées par le champ électrique vers l'électrode ou la plaque plane de polarité inverse. Dans leur déplacement ces particules entrent en collision avec d'autres particules présentes dans le volume et peuvent se re-combiner et annuler leur charge ou créer de nouvelles charges. Ainsi, dans ces collisions, les filaments vont également recevoir des charges électrostatiques et subir à leur tour les forces électrostatiques créées par le champ électrique. Tous les filaments n'étant pas chargés de façon identique ne vont pas subir des forces et des déplacements identiques et ainsi vont se disperser dans l'espace situé entre l'électrode et la plaque plane.
D'autre part, les filaments sont préférentiellement chargés avec la même polarité. En effet, le matériau constituant le filament est de nature électropositive ou électronégative et donc a tendance à plus facilement accepter les charges de la polarité correspondant à son affinité électrostatique. De part cette charge, les filaments vont avoir tendance à se repousser les uns des autres et ainsi à occuper de façon plus uniforme le volume d'air disponible.

Les paramètres importants du dispositif sont la tension appliquée entre les électrodes, généralement quelques dizaines de kilovolts, de 10 à 70 kilovolts) et le courant qui s'établit (par déplacement des ions) entre ces même éléments (quelques dizaines de milliampère par mètre de longueur, de 2 à 20 mA par mètre de longueur).

La tension appliquée influence directement la force appliquée sur une particule chargée. En effet une particule possédant une charge Q subit une force F = Q x E, E étant le champ électrique qui est directement proportionnel à la tension électrique.

Le courant obtenu est l'image de la quantité des charges qui transitent entre les électrodes. Ainsi, l'augmentation du courant indique une augmentation de la quantité de charges présentent dans le volume entre les électrodes et par conséquence une augmentation de la probabilité de déposer des charges sur les filaments et de modifier leur trajectoire.

L'intérêt majeur de ce dispositif électrostatique est qu'il permet de disperser les regroupements de filaments qui sont générés par les équipements situés en amont. Ces regroupements ont généralement pour origine des turbulences ou des hétérogénéités locales des écoulements d'air, dont il est difficile voir impossible de s'affranchir en totalité.

Le dispositif électrostatique en induisant une charge électrique sur les filaments, provoque leur déplacement relatif dans l'espace soit par le champ électrique créé par le dispositif électrostatique lui même soit par répulsion avec les filaments voisins qui présentent la même polarité.

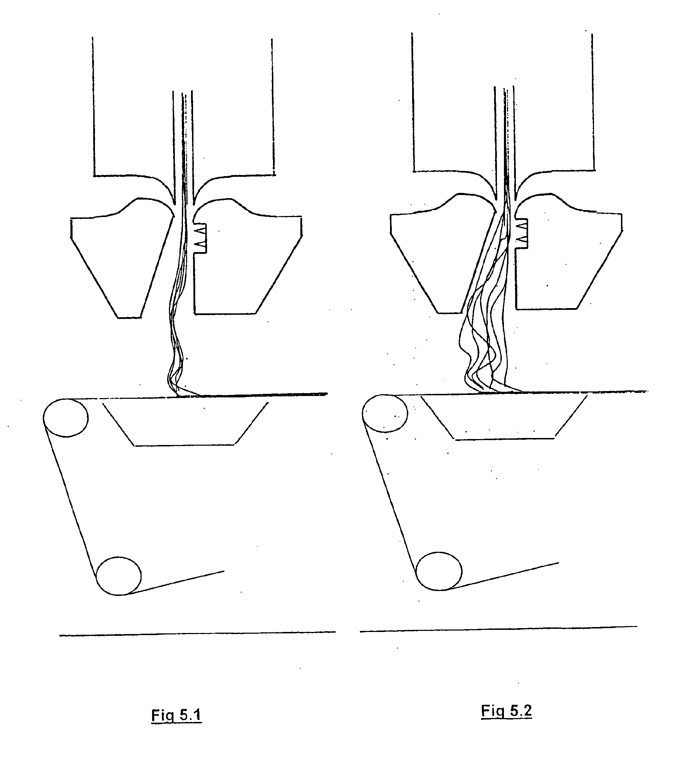

La figure 5 montre deux exemples des trajectoires suivies par les filaments dans le cas où il n'y a pas de dispositif électrostatique (fig 5.1) et dans le cas où il y en a un (fig 5.2).

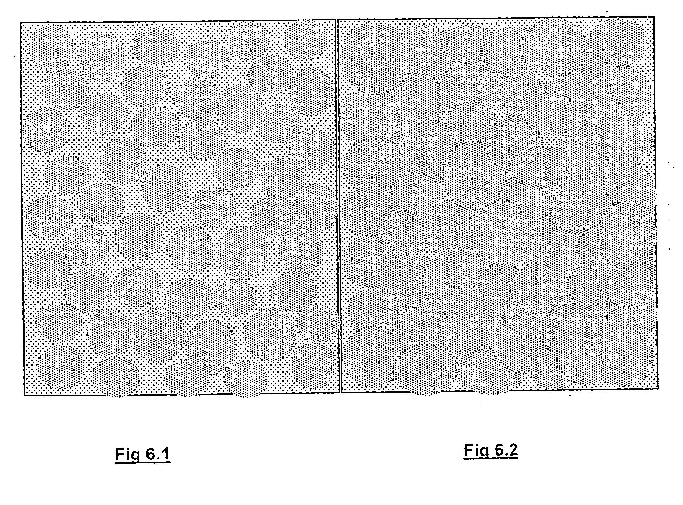

Cet effet sur les filaments permet de modifier fortement l'aspect du voile non tissé comme le montre la Fig 6.

En effet, comme schématisé sur la figure 6.1 (fig 6.1.), sans dispositif électrostatique le voile présente en général un aspect nuageux constitué de zones contenant un grand nombre de filaments fortement entrelacés et de zones contenant un nombre beaucoup plus petit de filaments. Toutes les propriétés physiques du voile (comme la masse surfacique, le comportement sous un effort de traction, la perméabilité à un gaz, un liquide ou une poudre) sont altérées par cette hétérogénéité.

Lorsqu'il y a un dispositif électrostatique, les zones contenant plus de filaments sont beaucoup plus diffuses, leur taille augmente, elles se recouvrent les unes les autres (fig 6.2.). De ce fait, le voile gagne en uniformité et l'ensemble des propriétés physiques recherchées par les utilisateurs sont améliorées.

On constate toutefois, qu'en quelques heures le dispositif de production d'un voile de non-tissé ne donnent plus un voile satisfaisant comme celui de la figure 6.2, mais redonne un voile tel que celui de la figure 6.1.

L'invention pallie cet inconvénient en permettant d'obtenir un voile ayant de bonnes propriétés pendant une longue durée de fonctionnement.

L'invention a pour objet une tour spunbond comprenant successivement de haut en bas :
- une filière donnant des filaments chauds
- un dispositif de refroidissement des filaments chauds en des filaments refroidis par de l'air entrant par une entrée d'air de refroidissement
- un dispositif d'étirage des filaments refroidis en des filaments étirés par de l'air entrant par une entrée d'air d'étirage, et
- un dispositif de formation pour la dépose des filaments étirés en un voile sur un tapis convoyeur, le dispositif de formation comprenant deux fentes opposées d'entrée d'air à un même niveau, chaque fente s'étendant sur toute l'étendue transversale du dispositif de formation, et un dispositif électrostatique en dessous du niveau des fentes caractérisée par
des moyens de dépoussiérage de l'air entrant par les fentes.

L'effet Corona expliqué ci-dessus de façon très simplifiée est en fait un phénomène physique extrêmement complexe. Les molécules et ions créés dans cette réaction sont très fortement dépendants de la polarité et de la composition et de la qualité du gaz présent dans l'espace entre l'électrode et la plaque plane.

Ainsi, des particules solides ou des molécules chimiques présentes dans le gaz pourront au même titre que les filaments recevoir une charge électrostatique et subir les effets des forces électrostatiques. Ces particules subiront alors un déplacement horizontal soit vers l'électrode, soit vers la plaque plane et pourront aller jusqu'à se déposer sur ces éléments entraînant une pollution du dispositif.

L'effet constaté de cette pollution est la diminution de l'effet Corona, qui induit une diminution du courant à tension constante et qui impose d'augmenter la tension nécessaire pour établir un courant donné.

Ceci a deux effets perturbateurs sur le système :
- Le premier, en réduisant le courant, on réduit la quantité de charges présentes dans l'espace et donc la probabilité de charger les filaments. Il s'ensuit une diminution des charges présentent sur les filaments et par conséquent une diminution de la quantité de filaments qui se déplacent.
- Le deuxième, en augmentant la tension, on augmente le champ électrique moyen qui existe entre l'électrode et la plaque plane. Ainsi à charge équivalente, les filaments subissent un effort plus important et donc une plus grande amplitude de déplacement. Ces filaments dans leur déplacement viennent en contact avec les parois du canal ce qui a pour effet de créer des défauts sur le non-tissé.

En général durant l'exploitation du dispositif, l'effet de l'encrassement se caractérise par une augmentation de la tension appliquée afin de maintenir le courant à la valeur souhaitée puis, lorsque la tension maximum disponible est atteinte, par une diminution du courant.

Parallèlement à cette diminution du courant, l'aspect du voile change pour passer progressivement de l'aspect quasi uniforme de la Fig 6.2. à l'aspect hétérogène de la Fig 6.1. En deçà d'une certaine valeur de courant, l'aspect devient trop nuageux et le produit n'est plus acceptable par l'utilisateur final. L'installation est alors arrêtée afin de permettre un nettoyage du dispositif. Le critère de jugement pour décider de l'arrêt de l'installation pour nettoyage est généralement un niveau de courant minimum en deçà duquel le non-tissé est considéré comme non conforme.

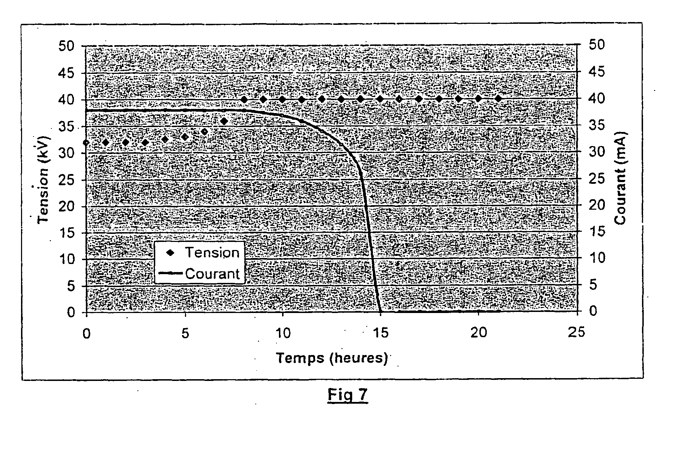

La Fig 7 montre une courbe d'évolution typique d'un dispositif de charge électrostatique utilisé dans des conditions normales de production avant mise en place des améliorations suivant l'invention. L'installation est réglée pour fournir un courant de 38 milliampères environ sous une tension de 32 kilovolts. Pendant 3 heures, le dispositif fonctionne de façon stable, la tension et le courant sont constants dans le temps. Au bout de 3 heures environ, on note une augmentation de la tension nécessaire afin de maintenir le courant à la valeur souhaitée de 38 milliampères. Cette augmentation de tension est liée au dépôt sur la plaque de masse et sur les électrodes de particules qui créent une couche isolante. La tension augmente régulièrement jusqu'à atteindre le maximum disponible à la source haute tension (40 kilovolts dans l'exemple choisi). Une fois le maximum de tension atteint, l'évolution de l'encrassement du dispositif entraîne une diminution du courant, d'abord faible puis progressivement de plus en plus rapide. Au bout de 12 à 13 heures de production le courant disponible est inférieur à 30 milliampère (soit 80% de la valeur initiale) et les performances du système sont insuffisantes pour assurer une qualité de production suffisante.

De préférence : il est prévu des moyens de dépoussiérage de l'air entrant par l'entrée d'air de refroidissement et par l'entrée d'air d'étirage,
- les moyens de dépoussiérage de l'air entrant par les fentes et/ou par l'entrée d'air de refroidissement comprennent un filtre ayant un seuil de filtration compris entre 80 et 90 % gravimétrique,
- les moyens de dépoussiérage de l'air entrant par l'entrée d'air d'étirage comprennent un filtre à cartouche ayant un seuil de filtration de 0,01 à 10 microns en amont d'un compresseur.

Suivant une variante, les moyens de dépoussiérage comprennent un aspirateur en dessous du convoyeur aspirant le courant d'air dans un circuit de recyclage le retournant au dispositif d'entraînement. Une fois que le courant d'air a été dépoussiéré, on peut le retourner à l'installation sans qu'il provoque d'encrassement. De préférence, il est prévu un dispositif de réglage du débit de l'aspirateur. On recycle d'autant mieux que l'on prévoit un manchon de confinement du paquet de filaments allant du bas du dispositif d'entraînement au convoyeur. On peut prévoir aussi pour la même raison une chambre d'alimentation en air du dispositif d'entraînement, l'entrée de la chambre étant équipée d'un filtre à poussière.

L'installation peut comprendre des moyens de déshumidification du courant d'air. Les particules d'eau ont en effet le même effet néfaste que les poussières. Ces moyens peuvent comprendre en amont du dispositif d'entraînement successivement un échangeur de chaleur air/eau, un séparateur de gouttelettes et un réchauffeur. Ce type de séparateur peu coûteux suffit pour améliorer la longévité du bon fonctionnement de l'installation.

Aux dessins annexés, donnés uniquement à titre d'exemple :
la figure 1 est une représentation schématique d'une tour spunbond,
la figure 2 est une vue en perspective de deux types différents de paquets de filament,
la figure 1 est une représentation schématique d'une tour spunbond,
la figure 2 est une vue en perspective de deux types différents de paquets de filament,
la figure 3 illustre par deux schémas l'effet d'étirage,
la figure 4 illustre par deux schémas l'effet Corona
la figure 5.1 est un schéma illustrant la répartition des filaments lorsqu'il n'y a pas de dispositif électrostatique alors qu'il y en a un à la figure 5.2,
les figures 6.1 et 6.2 sont des vues du non-tissé obtenu respectivement aux figures 5.1 et 5.2,
la figure 7 est une courbe donnant la tension et le courant en fonction du temps d'un dispositif de charge électrostatique alors que la tour spunbond n'a pas de dépoussiérage,

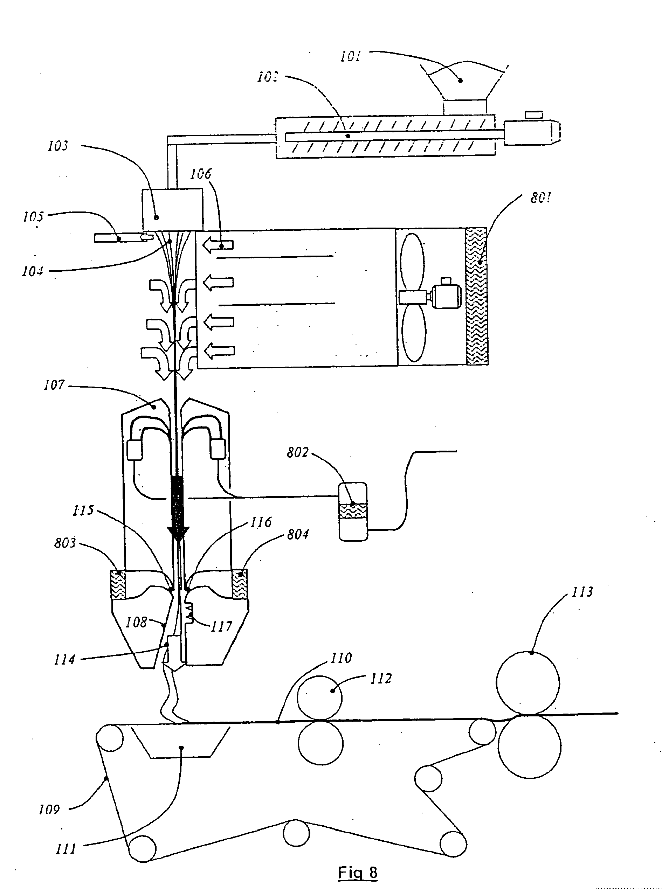

la figure 8 est une vue schématique d'une tour spunbond suivant l'invention,

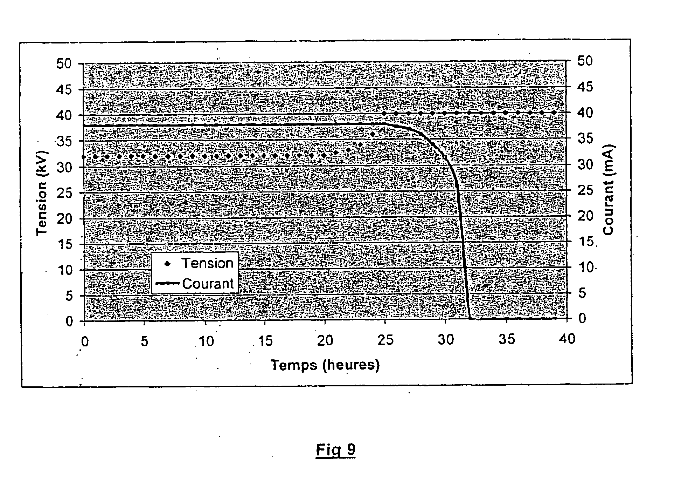

la figure 9 est un graphique donnant la tension et le courant du système électrostatique en fonction du temps de la tour spunbond de la figure 8,

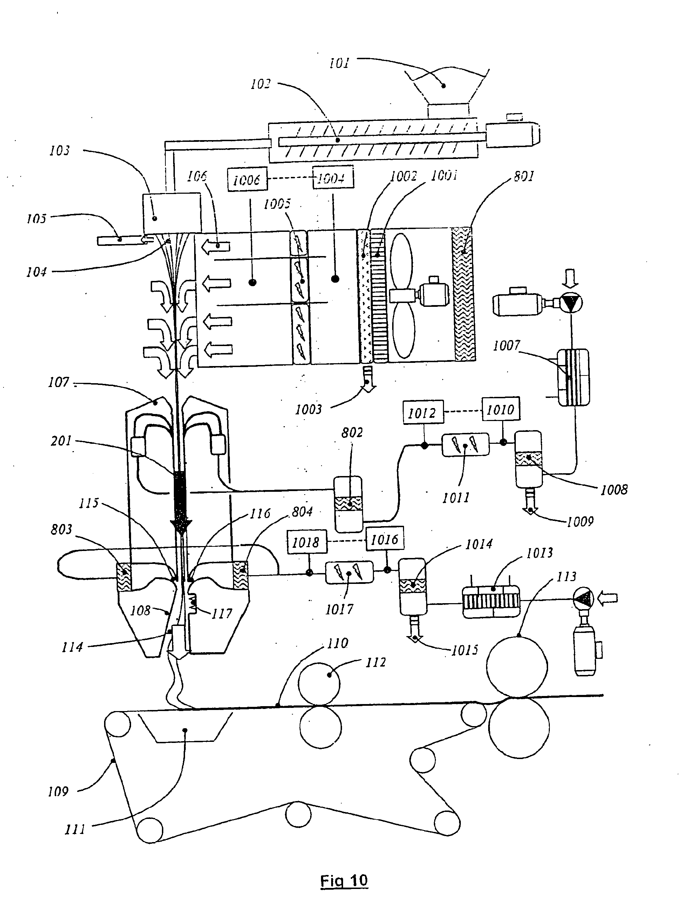

la figure 10 est une variante d'une tour spunbond suivant l'invention,

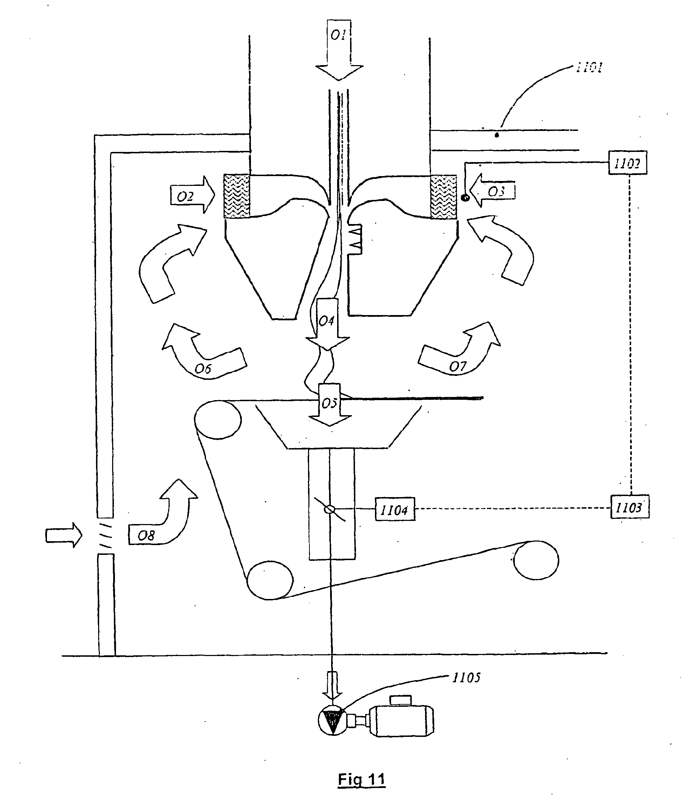

la figure 11 est une variante d'une tour spunbond suivant l'invention,

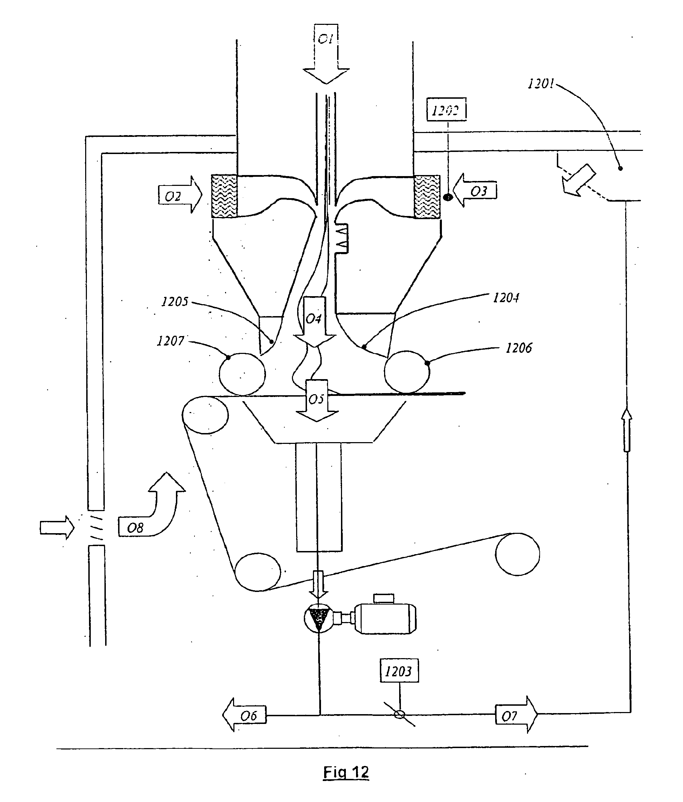

la figure 12 est une autre variante d'une tour spunbond suivant l'invention,

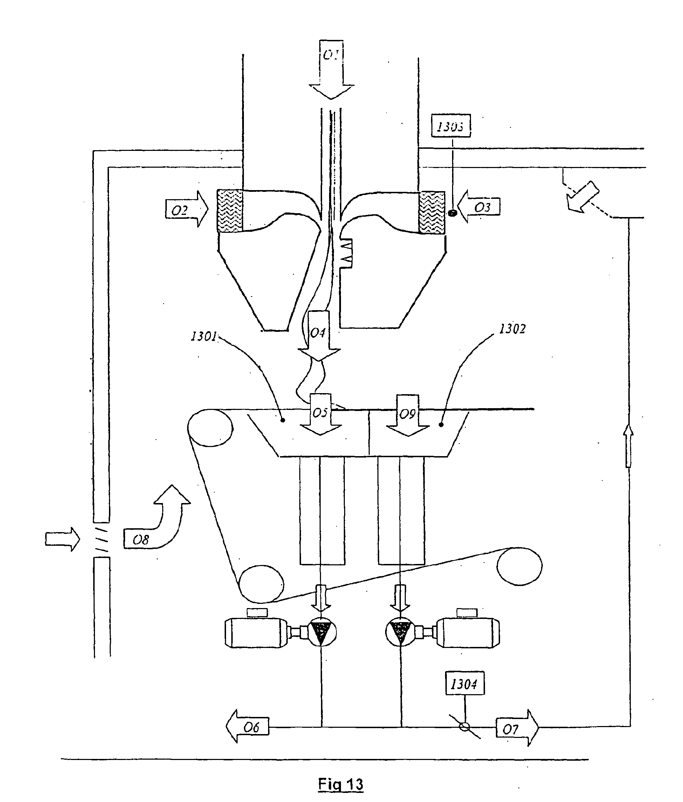

la figure 13 est une variante d'une tour spunbond suivant l'invention,

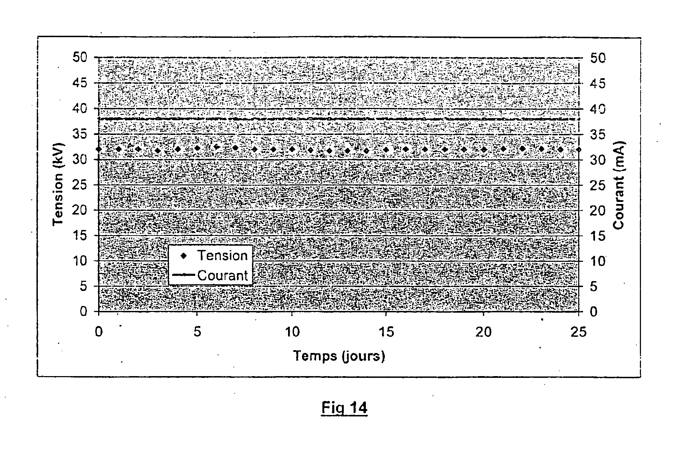

la figure 14 est un graphique donnant la tension et le courant du dispositif électrostatique en fonction du temps de la tour spunbond de la figure 13.

La tour spunbond de la figure 8 comporte tous les éléments de la tour spunbond de la figure 1 qui ne seront donc pas décrits à nouveau et auxquels on affecte les mêmes repères.

Une première amélioration de la tour consiste à prévoir des systèmes de filtration adéquats disposés comme indiqué sur la figure 8 en amont de toutes les entrées d'air dans le système de formation. Ainsi sont concernés
- L'air introduit dans le dispositif d'étirage avec les filaments. Du fait de la présence des filaments, il n'est pas possible de filtrer directement l'air entrant dans le dispositif d'étirage. Par contre, comme une grande proportion de l'air entrant dans.le dispositif d'étirage provient de l'air de refroidissement des filaments, entraîné par friction avec les filaments, il est utile de filtrer l'air de refroidissement des filaments. Ceci peut être fait comme indiqué sur la figure 8 par la mise en place de filtres amovibles (801) à l'entrée de la gaine d'amenée de l'air des filaments. Les filtres utilisés seront de préférence des filtres plissés (permettant d'accroître la surface de filtration) et présentant un seuil de filtration compris de préférence entre 80 et 90% gravimétrique. Les filtres PRP3 à action électrostatique naturelle, de la société Inter-filtre ont été utilisés avec succès.
- L'air introduit dans le dispositif d'étirage par les fentes d'injection. Le dispositif étant alimenté par de l'air sous pression, le dispositif de filtration sera de préférence un filtre à cartouches cylindriques positionné sur la canalisation d'amenée de l'air comprimé (fig 8 802) en amont d'un compresseur. Un seuil de filtration de 0,01 microns à 10 microns est recommandé pour une bonne efficacité du dispositif. Les cartouches filtrantes type N (seuil = 1µ) et S (seuil=0,01µ) de la société Chauméca Gohin ont été testées avec succès.
- L'air introduit dans le dispositif d'étirage ou dans le diffuseur par les fentes d'injection additionnelles. La filtration de cet air pourra être faite par la mise en place en amont des fentes d'injection d'une chambre d'alimentation. L'entrée de cette chambre sera équipée d'un ensemble de filtres amovibles (fig 8 803 et 804). Les filtres utilisés seront de préférence des filtres plissés (permettant d'accroître la surface de filtration) et présentant un seuil de filtration compris de préférence entre 80 et 90% gravimétrique. Les filtres PRP3 à action électrostatique naturelle, de la société Inter-filtre ont été utilisés avec succès.
- Il est important de noter que les fentes qui introduisent de l'air juste au dessus du dispositif électrostatique sont prépondérantes et doivent être traitées avec le plus grand soin. En effet les particules introduites par ces fentes en cas de dysfonctionnements de la filtration passeront à proximité immédiate des électrodes et seront donc préférentiellement déposées sur ces dernières par l'effet électrostatique.

La mise en place des ces différents éléments de filtration permet d'améliorer la durée de vie entre deux nettoyages. La Fig 9 montre le comportement typique d'un dispositif électrostatique identique à celui décrit dans la Fig 7 mais équipé de filtres sur les entrées d'air.

Ainsi, on peut constater que la dégradation du comportement commence seulement après environ 20 heures de production au lieu de 3 heures dans le cas où les entrées d'air ne sont pas filtrées. L'arrêt de l'installation pour nettoyage, imposé par une dégradation inacceptable de l'aspect du voile lorsque le courant descend en dessous de 30 mA, est atteint après 30 heures de fonctionnement, alors que, sans les filtres, l'arrêt était imposé après 13h30 de fonctionnement.

Un perfectionnement de l'invention consiste à prévoir un système permettant de contrôler également l'humidité relative de l'air dans l'installation.

L'humidité relative de l'air recherchée étant en général inférieur aux conditions ambiantes rencontrées dans les usines de production, la solution adoptée pour atteindre l'humidité relative de l'air requis sera un refroidissement de l'air, en deçà du point de rosée pour condenser l'excès d'humidité, suivi d'un réchauffage permettant de retrouver la température souhaitée.

L'humidité relative de l'air est le rapport ramené en pourcentage de la pression partielle de vapeur d'eau contenue dans l'air à la pression partielle de vapeur à saturation dans des conditions de température et de pression identiques. L'humidité relative de l'air peut être mesurée à l'aide des capteurs d'humidité relative qui convertissent directement le taux d'humidité de l'air en signal électrique.

Un tel dispositif comme visualisé sur la figure 10, sera mis en place sur l'air de refroidissement des filaments et comprend un échangeur air/eau pour le refroidissement (1001), un séparateur de gouttelettes (1002) équipé d'un orifice de sortie des condensats (1003). Un capteur de température (1004) situé en aval du séparateur de gouttelettes permet de contrôler et de réguler la température en sortie du refroidisseur en agissant soit sur le débit d'eau soit sur température de l'eau dans le refroidisseur. Par refroidissement, l'air est ainsi amené à la température de rosée désirée pour le procédé. La valeur recherchée est généralement comprise entre 5 et 15°C et préférentiellement inférieure à 10°C. La recherche de valeurs inférieures nécessite des dispositifs exigent plus d'énergie et n'apportent pas d'amélioration suffisamment significative pour justifier les coûts d'exploitation forcément plus élevés. Un réchauffeur (1005) permet ensuite de ramener l'air à la température finale requise, en général comprise entre 10 et 35°C, plus couramment dans la plage 15°C à 30°C. La puissance du réchauffeur est régulée grâce à un capteur de température/humidité (1006) située en aval du réchauffeur. Grâce à la mesure de l'humidité, l'utilisateur peut ainsi contrôler l'humidité relative obtenue. Le dispositif peut également être amélioré en contrôlant automatiquement la température de l'air en sortie du refroidissement en fonction de l'humidité relative recherchée finalement.

Ce système de déshumidification peut être mise en place sur toutes les entrées d'air dans l'installation.

Un dispositif identique est ainsi mis en place sur l'air d'injection du dispositif d'étirage et comprend le refroidisseur (1007), le séparateur de gouttelettes (1008) avec orifice de sortie des condensats (1009) et le réchauffeur (1011). La température en sortie du refroidisseur est contrôlée au moyen du capteur de température (1010). La température et l'humidité finale sont contrôlées au moyen du capteur de température et d'humidité (1012). L'air sec peut être aspiré par la tour à partir d'une chambre (non représentée) entourant une partie de la tour.

Le contrôle de l'humidité de l'air au niveau des fentes d'injection du dispositif de formation importe également d'autant plus que l'air introduit par ces fentes passe à proximité des électrodes. Le traitement d'air pourra être fait par un dispositif identique au précédent, à savoir refroidissement, élimination des condensats et réchauffage. Ce dispositif peut éventuellement être évité dans le cas où le débit air évacué par le dispositif d'aspiration (fig 8 111) situé sous la toile de formation évacue uniquement une quantité d'air correspondant à l'air injecté dans les fentes du dispositif d'étirage et l'air introduit à l'entrée du dispositif d'étirage.

Ainsi, comme montré sur la figure 11, le débit total sortant du dispositif de formation (Q4) est constitué du débit amené par unit d'étirage (Q1), complété du débit amené par les fentes d'injection du diffuseur (Q2 et Q3). La proportion entre les débits peut varier suivant la géométrie du dispositif de formation et des fentes. En général, le débit Q1 amené par l'unité d'étirage représente 50 à 80% du débit total Q4 sortant du dispositif de formation, le débit Q2+Q3 entrant par les fentes d'injection du système de formation étant alors compris entre 20 et 50% du débit Q4.
Si le débit Q5 aspiré par le dispositif d'aspiration situé sous la toile du convoyeur est inférieur au débit Q4 sortant du dispositif de formation, une partie de ce dernier est donc refoulé en deux débits Q6 et Q7. Lorsque l'ensemble est disposé à l'intérieur d'un caisson (1101) isolant le dispositif de l'air ambiant, les débits Q6 et Q7 sont alors ré-aspirés en Q2 et Q3 au niveau des fentes du diffuseur. Une ouverture pratiquée dans le caisson d'isolement permet l'entrée ou le refoulement du débit Q8 nécessaire pour équilibrer l'ensemble des débits.

Pendant la marche de l'installation, la température injectée au niveau des débits Q2 et Q3 augmente progressivement entraînant une diminution de l'humidité relative. Après quelques minutes de fonctionnement l'ensemble se stabilise à la valeur recherchée.

Un capteur (1102) situé dans la zone d'aspiration des débits Q2 et Q3 permet de mesurer les valeurs de température et d'humidité. Il peut être relié par le biais d'un dispositif de régulation (1103) à un registre motorisé (1104) qui permet le contrôle du débit aspiré par le ventilateur (1105).

D'autres variantes du dispositif d'équilibrage des débits peuvent également être mise en place comme indiqué sur les figures 12 et 13.

La figure 12 montre un dispositif comportant un réseau de gaines (1201) permettant de ramener une partie de l'air sortant du ventilateur d'aspiration vers le caisson isolant. Le débit Q5, aspiré par le ventilateur et confiné par un manchon (1204) de confinement du paquet de filaments et allant jusqu'à deux rouleaux (1206, 1207) donnant l'étanchéité vis-à-vis du convoyeur, est égal au débit Q4 sortant du dispositif de formation. Au refoulement du ventilateur, le débit Q5 est divisé en un débit Q6 évacué vers l'extérieur et un débit Q7 re-circulé vers le caisson d'isolement. Le débit Q7 est ajusté par exemple au moyen d'un registre motorisé (1203). Un capteur (1202) installé dans le caisson d'isolement permet de contrôler la température et l'humidité de l'air. Le registre (1203) peut éventuellement être automatiquement asservi à la mesure de température et d'humidité fournie par le capteur (1202) par un système de régulation automatique.
Ce dispositif permet d'ajuster la proportion de débit re-circulé sans modifier la quantité d'air aspirée à travers la toile du convoyeur. En effet, cette dernière est souvent imposée par d'autres paramètres du procédé et le fait de faire varier cette valeur pour contrôler la température et l'humidité dans le caisson d'isolement, comme indiqué sur la figure 11, peut entraîner l'apparition de nouveaux défauts sur le voile de non-tissé.

La figure 13 montre un dispositif comportant un double système d'aspiration sous le convoyeur. Le premier dispositif (1301) dénommé vide de formation et situé directement sous la sortie du diffuseur agit directement lors de la formation du voile de non tissé sur le convoyeur. Le second dispositif aspirant (1302) appelé vide de maintien est situé en aval suivant le défilement du tapis. Il permet de s'assurer d'un bon maintien du voile pendant le transport jusqu'au rouleau presseur ou jusqu'au dispositif de consolidation.

Les deux dispositifs sont ajustables indépendamment l'un de l'autre et peuvent comporter chacun un système de re-circulation de l'air. En général, l'air provenant du vide de formation (débit Q5) est évacué en totalité vers l'extérieur, de façon à éliminer efficacement les produits gazeux issus de l'effet corona. L'air provenant du vide de maintien (débit Q9) est re-circulé partiellement ou en totalité grâce au registre motorisé (1304) pour obtenir les valeurs de température et d'humidité requise mesurées par le capteur (1303).

Grâce au contrôle combiné de la propreté et de l'humidité relative de l'air qui passe dans le dispositif électrostatique, au moyen des dispositifs tels que décrits ci-dessus, on obtient un comportement du dispositif électrostatique comme représenté sur la figure 14, à savoir, une parfaite stabilité sur plusieurs jours de fonctionnement.

## Revendications

1. Tour spunbond comprenant successivement de haut en bas :
- une filière (103) donnant des filaments chauds
- un dispositif (106) de refroidissement des filaments chauds en des filaments refroidis par de l'air entrant par une entrée d'air de refroidissement
- un dispositif (107) d'étirage des filaments refroidis en des filaments étirés par de l'air entrant par une entrée d'air d'étirage, et
- un dispositif (108) de formation pour la dépose des filaments étirés en un voile sur un tapis (109) convoyeur, le dispositif de formation comprenant deux fentes (115, 116) opposées d'entrée d'air à un même niveau, chaque fente s'étendant sur toute l'étendue transversale du dispositif de formation, et un dispositif (117) électrostatique en dessous du niveau des fentes,
**caractérisée par**
des moyens (803, 804) de dépoussiérage de l'air entrant par les fentes.

2. Tour spunbond suivant la revendication 1, **caractérisé par** des moyens de dépoussiérage de l'air entrant par l'entrée d'air de refroidissement et par l'entrée d'air d'étirage.

3. Tour spunbond selon la revendication 1 ou 2, **caractérisée en ce que** les moyens de dépoussiérage de l'air entrant par les fentes et/ou par l'entrée d'air de refroidissement comprennent un filtre ayant un seuil de filtration compris entre 80 et 90 % gravimétrique.

4. Tour spunbond selon l'une des revendications 2 ou 3, **caractérisée en ce que** les moyens de dépoussiérage de l'air entrant par l'entrée d'air d'étirage comprennent un filtre à cartouche ayant un seuil de filtration de 0,01 à 10 microns en amont d'un compresseur.

5. Tour spunbond suivant la revendication 3 ou 4, **caractérisée en ce que** les moyens de dépoussiérage comprennent un aspirateur (111) en dessous du convoyeur aspirant le courant d'air dans un circuit de recyclage le retournant dans une chambre d'alimentation des fentes, les filtres étant placés à l'entrée de la chambre.

6. Tour spunbond suivant la revendication 5, **caractérisée par** un dispositif de réglage du débit de l'aspirateur.

7. Tour spunbond suivant la revendication 5 ou 6, **caractérisée en ce qu'**un manchon (1204) de confinement du paquet de filaments allant du bas du dispositif de formation au convoyeur.

8. Tour spunbond suivant l'une des revendications précédentes, **caractérisée par** des moyens de déshumidification du courant d'air.

9. Tour spunbond selon l'une des revendications précédentes, **caractérisée en ce qu'**il comprend deux dispositifs d'aspiration sous le convoyeur, l'un directement sous le dispositif de formation et l'autre en aval dans le sens de déplacement du convoyeur.

## Patentansprüche

1. Spunbond-Turm, der nacheinander von oben nach unten umfasst :
- eine Spinndüse (103), die heiße Filamente liefert,
- eine Vorrichtung (106) zum Abkühlen der heißen Filamente zu Filamenten, die mittels über einen Kühllufteinlass eintretender Luft gekühlt sind,
- eine Vorrichtung (107) zum Verstrecken der abgekühlten Filamente zu Filamenten, die mittels über einen Strecklufteinlass eintretender Luft verstreckt sind, und
- eine Bildungsvorrichtung (108) für das Ablegen der verstreckten Filamente als ein Flor auf einem Förderband (109), wobei die Bildungsvorrichtung zwei einander gegenüberliegende Lufteinlassschlitze (115, 116) auf einer gleichen Ebene, wobei jeder Schlitz sich über die gesamte Querausdehnung der Bildungsvorrichtung erstreckt, sowie eine elektrostatische Vorrichtung (117) unterhalb der Ebene der Schlitze umfasst,
**gekennzeichnet durch**
Mittel (803, 804) zum Entstauben der über die Schlitze eintretenden Luft.

2. Spunbond-Turm nach Anspruch 1, **gekennzeichnet durch** Mittel zum Entstauben der über den Kühllufteinlass und über den Strecklufteinlass eintretenden Luft.

3. Spunbond-Turm nach Anspruch 1 oder 2, **dadurch gekennzeichnet, dass** die Mittel zum Entstauben der über die Schlitze und/oder über den Kühllufteinlass eintretenden Luft ein Filter umfassen, das eine Filterdichte im Bereich zwischen 80 und 90 %, gravimetrisch, aufweist.

4. Spunbond-Turm nach einem der Ansprüche 2 oder 3, **dadurch gekennzeichnet, dass** die Mittel zum Entstauben der über den Strecklufteinlass eintretenden Luft ein Filter mit einem Einsatz, der eine Filterdichte von 0,01 bis 10 Mikron aufweist, vor einem Verdichter umfassen.

5. Spunbond-Turm nach Anspruch 3 oder 4, **dadurch gekennzeichnet, dass** die Entstaubungsmittel einen Sauger (111) unterhalb des Förderers umfassen, der den Luftstrom in einen Rückführkreis saugt, welcher ihn in eine Kammer zum Beaufschlagen der Schlitze zurückführt, wobei die Filter am Eingang der Kammer angeordnet sind.

6. Spunbond-Turm nach Anspruch 5, **gekennzeichnet durch** eine Vorrichtung zum Einstellen des Durchsatzes des Saugers.

7. Spunbond-Turm nach Anspruch 5 oder 6, **dadurch gekennzeichnet, dass** eine Manschette (1204) zum Einschließen des Filamentbündels vom unteren Teil der Bildungsvorrichtung zum Förderer verläuft.

8. Spunbond-Turm nach einem der vorhergehenden Ansprüche, **gekennzeichnet durch** Mittel zum Entfeuchten des Luftstroms.

9. Spunbond-Turm nach einem der vorhergehenden Ansprüche, **dadurch gekennzeichnet, dass** er zwei Saugvorrichtungen unter dem Förderer umfasst, die eine direkt unter der Bildungsvorrichtung und die andere in Bewegungsrichtung des Förderers nachgeschaltet.

## Claims

1. Spunbond tower successively comprising, in a downward direction:
- a die (103) providing hot filaments,
- a device (106) for cooling the hot filaments to form cooled filaments by means of air which is introduced via a cooling air inlet,
- a device (107) for drawing the cooled filaments to form drawn filaments by means of air which is introduced via a drawing air inlet and
- a forming device (108) for depositing drawn filaments in the form of a web on a conveyor belt (109), the forming device comprising two opposing air inlet apertures (115, 116) at the same level, each aperture extending over the entire transverse extent of the forming device and an electrostatic device (117) below the level of the apertures,
**characterised by**
means (803, 804) for removing dust from the air being introduced via the apertures.

2. Spunbond tower according to claim 1, **characterised by** means for removing dust from the air which is introduced via the cooling air inlet and via the drawing air inlet.

3. Spunbond tower according to claim 1 or claim 2, **characterised in that** the means for removing dust from the air which is introduced via the apertures and/or via the cooling air inlet comprise a filter having a filtration threshold between 80% and 90% gravimetric.

4. Spunbond tower according to either claim 2 or claim 3, **characterised in that** the means for removing dust from the air which is introduced via the drawing air inlet comprise a cartridge type filter having a filtration threshold of 0.01 to 10 micrometres upstream of a compressor.

5. Spunbond tower according to either claim 3 or claim 4, **characterised in that** the dust removal means comprise an intake (111) below the conveyor drawing in the current of air into a recycling circuit which returns it to a chamber for supplying the apertures, the filters being positioned at the inlet of the chamber.

6. Spunbond tower according to claim 5, **characterised by** a device for adjusting the flow of the intake.

7. Spunbond tower according to either claim 5 or claim 6, **characterised by** a confinement sleeve (1204) for the bundle of filaments extending from the bottom of the forming device to the conveyor.

8. Spunbond tower according to any one of the preceding claims, **characterised by** means for dehumidifying the current of air.

9. Spunbond tower according to any one of the preceding claims, **characterised in that** it comprises two intake devices below the conveyor, one directly below the forming device and the other downstream in the direction of movement of the conveyor.
